# EUROPEAN PATENT SPECIFICATION

(11) **EP 1 454 787 B1**
(45) Date of publication and mention of the grant of the patent: **15.10.2008**
(21) Application number: 04005115.3
(22) Date of filing: 04.03.2004
(51) Int. Cl.: B60L 15/20, B60L 11/18

(54) **Electric vehicle**
Elektrisches Fahrzeug
Véhicule électrique

(30) Priority: 07.03.2003 JP 2003061938
(43) Date of publication of application: 08.09.2004
(73) Proprietor: Yamaha Hatsudoki Kabushiki Kaisha, Iwata-shi, Shizuoka-ken (JP)
(72) Inventor: Kurosawa, Atsushi, Iwata-shi Shizuoka-ken (JP)
(74) Representative: Grünecker, Kinkeldey, Stockmair & Schwanhäusser Anwaltssozietät

(56) References cited:
- EP-A- 0 610 682
- DE-A1- 4 334 146
- DE-U1- 29 824 319
- JP-A- 6 121 405
- US-A- 5 552 988

## Description

The invention relates to an electric vehicle, in particular a two-wheeled vehicle, comprising a driving device including an electric motor for driving a driving wheel, and an electric motor operation control unit for operating said electric motor in an operation mode giving priority to power performance or in an operation mode giving priority to efficiency, which comprises an operation mode switching control means capable of switching said electric motor from the current operation mode to the other operation mode.

In a vehicle of this type, the electric motor has to be operated by a battery with a limited electrical capacity. Thus, the electric motor is usually operated in a mode which gives priority to traveling distance (economy mode), and, when driving torque is needed, the electric motor is operated in a mode which gives priority to power performance of the electric motor (power mode).

JP-A-Hei 11-205914 discloses an electric two-wheeled vehicle provided with a mode selection switch for selecting an economy mode or a power mode. In the power mode, the maximum allowable current value of the electric motor becomes greater than that in the economy mode and the driving torque of the electric motor is increased. By properly operating the mode selection switch, the rider selects the economy mode in traveling on a flat road at a constant speed and selects the power mode when extra power is needed, e.g. to accelerate or climb a hill.

Besides, an output controller is provided with which the vehicle having a small maximum output such as a motor scooter does not have difficulty in climbing a hill. To compensate for the lack of power of the electric motor during running in the economy mode, the output controller corrects the economy mode maximum allowable current value to a larger one when the vehicle is detected to be climbing a hill.

However, when the electric two-wheeled vehicle needs extra power except in climbing a hill, such as in accelerating or overtaking, a necessary driving force cannot be obtained if the rider has selected the economy mode. Further, every time extra power is needed, the rider has to operate the mode selection switch. This imposes a burden on the rider.

JP 06-121405 according to the preamble of claim 1 discloses an electric vehicle comprising an induction motor for driving wheels of said vehicle. A control device comprises a field current command change section changing between a power mode and an economy mode. An accelerator pedal sensor detects the motor load.

EP-A-0610682 discloses a vehicle having an electric motor controlled by a control device. A manually operable selector can be switched between a power mode and an economy mode. Dependent on a signal of the selector and an accelerator member, a torque limiter circuit issues a torque reference signal to said control device. In case the selector is in the economy mode and the accelerator is depressed in the "kick-down" mode, the torque limiter circuit allows the delivery of the maximum torque by the motor.

US-A-5552988 discloses an electric vehicle having an electric motor controlled by means of a controller. The controller is supplied with signals of a revolution sensor and an accelerator opening sensor. The controller includes a ROM in which a mode discrimination table discriminating between a drive mode and a regenerative braking mode is stored.

It is an object of the invention to provide an electric vehicle which can change the operation mode of an electric motor depending upon the running conditions of the vehicle without imposing a burden on the rider.

This object is solved by the features of claim 1

Even when the electric motor is operated in the economy mode, whenever an extra power is needed, for example, to overtake or clime a hill, this need can be detected by the motor load detecting device; so it is possible that the electric motor can be automatically switched to the power mode for a predetermined period of time and automatically returned to the economy mode after a set period, that is a predetermined period of time. It is, therefore, possible to accomplish operation in which priority is given to efficiency and high power performance can be achieved when necessary without imposing a burden on the rider.

According to this invention, the operation mode switching control means is configured to determine whether the rate of change in throttle displacement is a predetermined value or higher when the electric motor is in the operation mode giving priority to efficiency, to switch the electric motor from the operation mode giving priority to efficiency to the operation mode giving priority to power for a set period, that is a predetermined period of time, and to return the electric motor to the operation mode giving priority to efficiency after the set period which is a predetermined period of time.

Preferably, the electric motor operation control unit has operation mode determination means for determining the current operation mode of the electric motor.

More preferably, the electric motor operation control unit is configured to set the electric motor to the operation mode giving priority to efficiency.

Other preferred embodiments are subject to the subclaims.

In the following, the invention will be explained in greater detail by means of an embodiment with reference to the accompanying drawings, wherein:
- Fig. 1: is a side view of an electric two-wheeled vehicle provided with a driving device according to the present invention;
- Fig. 2: is a block diagram of an operation control unit for an electric motor; and
- Fig. 3: is a flowchart for explaining the operation of the operation control unit.

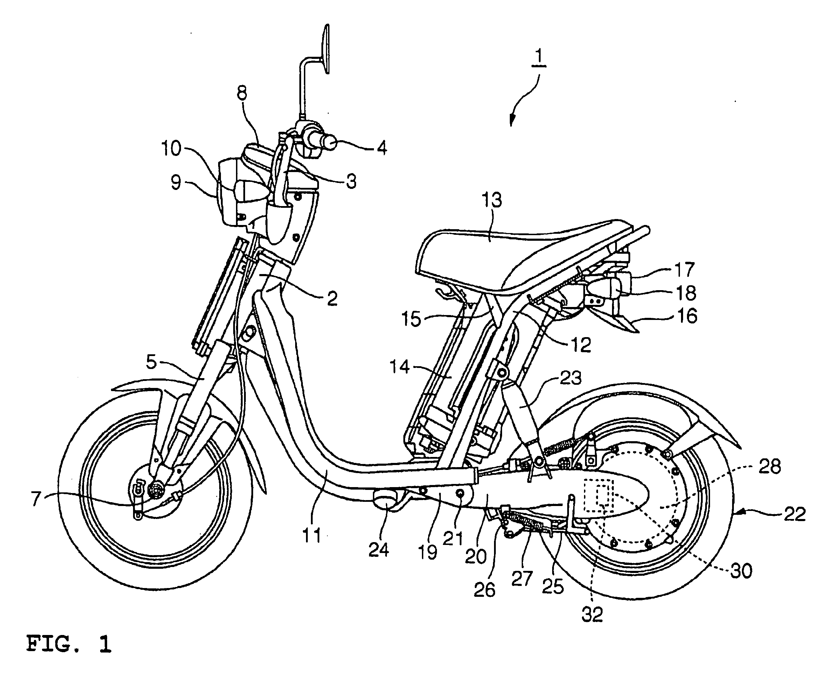

Description will be made of an electric two-wheeled vehicle provided with a driving device with reference to Fig. 1. As shown in Fig. 1, a pair of right and left rear arm brackets 19 are attached to the rear ends of right and left body frames 11, respectively, by welding. A rear arm 20 has a front end swingably (rotatably) supported by the rear arm brackets 19 through a pivot shaft 21 and a rear end at which a rear wheel 22 as a driving wheel is rotatably supported. The rear arm 20 and the rear wheel 22 are suspended from a body frame 12 by a rear cushion 23. Foot steps 24 are attached to lower parts of the body frames 11, respectively, and a side stand 25 is rotatably pivoted on a lower part of the rear arm 20 by a shaft 26. The side stand 25 is urged to a closed position by a return spring 27.

In a circular portion at the rear of the rear arm 20, a thin axial gap type electric motor 28 which is flat in the vehicle width direction is accommodated. An electric motor operation control unit 30 for controlling the electric motor 28 and an encoder 32 for detecting the rotational position of the rotor of the electric motor 28 are housed in the vicinity of the electric motor 28. Signals from the encoder are outputted to the electric motor operation control unit 30 so that the electric motor operation control unit 30 can detect the rotational speed of the electric motor. Based on the rotational speed, the traveling speed of the vehicle can be obtained.

An electric two-wheeled vehicle 1 shown in Fig. 1 has a head pipe 2 at an upper front part of its body, and a steering shaft is rotatably inserted through the head pipe 2. Handle bars 3 are attached to the upper end of the steering shaft. Grips 4 are provided on both ends of the handle bars 3. The grip 4 on the right in the traveling direction is a throttle grip which is rotatable.

Upper parts of a pair of right and left front forks 5 are attached to a lower part of the head pipe 2, and a front wheel 6 is rotatably mounted on a front wheel shaft 7 supported at the lower ends of the front forks 5. A meter 8 is located on the center of the handle bars 3. A head lamp 9 is located under the meter 8, and flasher lamps 10 are provided on both sides of the head lamp 9.

The paired right and left body frames 11 extend from the head pipe 2 toward the rear of the body. Each of the body frames 11, which is a circular pipe, extends backward and downward from the head pipe 2, curves in an arc and extends backward horizontally. A pair of right and left body frames 12 extend obliquely upward from the rear ends of the right and left body frames 11, respectively, and connected behind a seat 13.

A battery 14 is located between the paired right and left body frames 12. Seat stays having an inverted U shape are connected to the right and left body frames 12, respectively. The seat 13 is openably mounted on the seat stays supported by a pair of right and left stays 15, respectively. A rear fender 16 is attached to the rear ends of the body frames 12. A tail lamp 17 is attached to the rear side of the rear fender 16, and flasher lamps 18 are provided on both sides of the tail lamp 17.

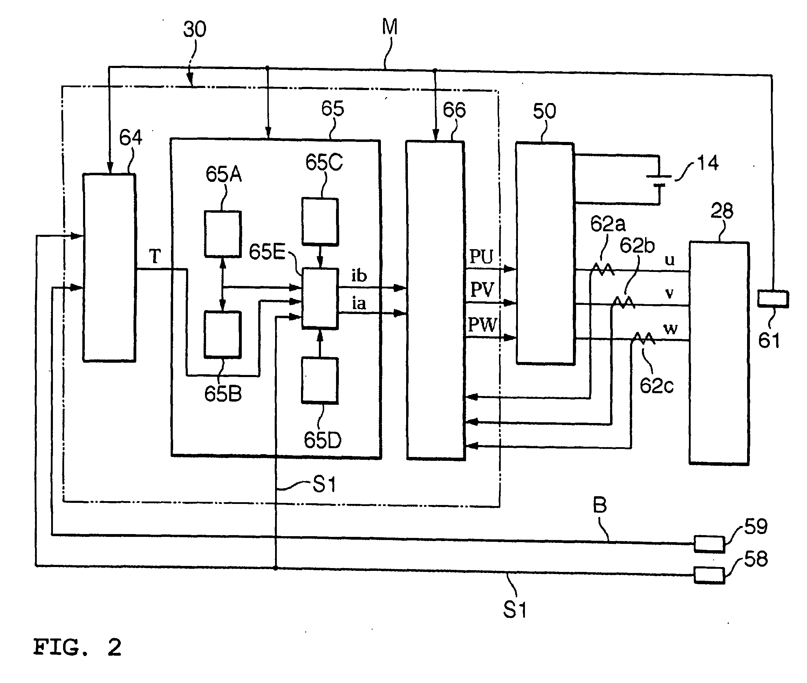

Fig. 2 is a block diagram of the driving device having the electric motor operation control unit 30. The driving device shown in the drawing drives an induction motor 28 as an electric motor for driving the driving wheel (rear wheel) with a torque control system. The rear wheel 22 shown in Fig. 1 is connected to the induction motor 28 without a transmission mechanism. The rotation of the induction motor is controlled by an inverter 50. The inverter 50 is controlled by PWM pulses PU, PV and PW outputted from the control unit 30. The DC voltage of a battery power source 14 is converted into three-phase AC voltage and supplied to the induction motor 28.

The throttle displacement is inputted into the electric motor operation control unit 30. The throttle displacement is detected by a throttle potentio (throttle displacement sensor) 58 which outputs a signal quantity S1 corresponding to the opening of a throttle valve. signals indicating the motor speed M, the motor currents iu, iv and iw, and the brake displacement B are also inputted into the electric motor operation control unit 30. Reference numeral 59 is a brake. The electric motor operation control unit 30 is constituted as an ECU provided with a microcomputer and peripheral digital circuits. An operation control program has been stored in a memory of the microcomputer in advance. The motor rotational speed and motor currents are detected by a motor speed detector 61 (the encoder mentioned before) and current detectors 62a, 62b and 62c, respectively.

The control unit 30 has a torque command computing part 64, a vector current command computing part 65, and a current control part 66. The vector current command computing part 65 has a power mode operation control part 65A and an economy mode operation control part 65B. The vector current command computing part 65 also has an operation mode duration setting part 65C and an operation mode determination flag 65D defined in a buffer.

The torque command computing part 64 reads the throttle opening S1 and other necessary signals and calculates a torque command T for the induction motor 28 required by the rider. The torque command T is inputted into the vector current command computing part 65. The vector current command computing part 65 outputs a field current command ia and a torque current command ib calculated therein to a current control part 66.

The current control part 66 calculates a current command value for the inverter 50 from the field current command ia, the torque current command ib, and the motor speed M by a vector control operation. In addition, the motor currents iu, iv and iw are provided to the current control part 66 as feedback, and the PWM pulses PU, PV and PW are outputted to the inverter 50. Motor currents necessary for the induction motor 28 can be thereby supplied from the inverter 50.

The vector current command computing part 65 has operation mode switching means/throttle displacement change rate obtaining means/vector current computing means 65E which switches the operation mode with reference to the set value of the flag 65D, calculates a rate of change in throttle displacement (throttle operation speed) based on the signal S1 from the potentio 58 in switching the operation mode, and obtains the field current command ia and the torque current command ib in the power mode or the economy mode.

The power mode operation control part 65A receives the motor speed M, and calculates a field current at the power mode and outputs it to the vector current computing means 65E. In the power mode, the maximum field current at the motor speed is obtained so that the inductive motor 28 can generate its maximum torque. The economy mode operation control part 65B calculates the field current at the economy mode in response to the torque command T. The field current is selected so that a necessary motor torque can be generated with minimum motor currents. The field current at the economy mode is decreased with decrease of the torque command T.

The vector current computing means 65E outputs a power mode field current as the field current command ia at the power mode, and an economy mode field current as the field current command ia at the economy mode. The vector current computing means 65E calculates the torque current command ib from the torque command T and the field current command ia.

An economy mode is set to the flag 65D in preference to a power mode. The operation mode switching means 65E switches the operation mode from the economy mode to the power mode when the rider operates the throttle grip to the accelerating side and the rate of change in throttle displacement is not less than a predetermined value. At this time, the set value of the flag is renewed to the value of the power mode.

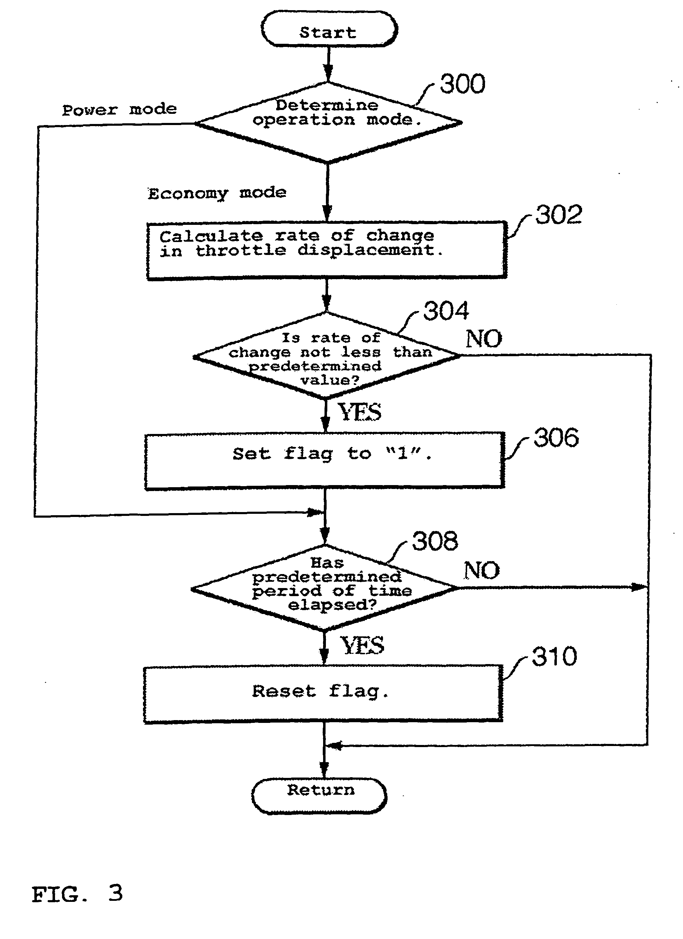

Description will be made of the operation of the control unit 30 with reference to the flowchart shown in Fig. 3. When the electric motor is started, the flowchart shown in Fig. 3 is executed as timer interrupt processing by the ECU. At the time of starting the electric motor, the operation mode determination flag 65D in the vector current command computing part 65 is forcibly set to "0" corresponding to the economy mode. As described later, a rate of change in throttle displacement is calculated, and the flag value is changed based on the calculated value.

In step 300, the vector current computing means 65E reads the value of the determination flag to determine the operation mode. When the determination flag is "0" corresponding to the economy mode, the process goes to step 302, where the throttle displacement change rate obtaining means 65E obtains an output from the throttle potentio and calculates the rate of change in throttle displacement.

The operation mode switching means 65E determines whether the rate of change in throttle displacement has been shifted to the accelerating side by a predetermined value or more. If yes, the operation mode determination flag is set to "1" corresponding to the power mode (steps 304 and 306). In step 304, when the rate of change in throttle displacement is not greater than the predetermined value, the process is returned.

In step 308, based on a power mode set period, which is a predetermined period of time, set in the operation mode duration setting part 65C, the vector current computing means 65E determines whether the set period has elapsed since the flag was set to the power mode based on a timer count value. When the set period has not elapsed yet, the flag is maintained at "1" and the process is returned. When the set period has elapsed, the process goes to step 310, where the flag is reset (set to "0" corresponding to the economy mode) and the process is returned.

The electric motor operation control unit 30 constantly monitors the operation mode determination flag and calculates the vector current so that the electric motor can be operated in a mode corresponding to the operation mode determination flag, and calculates the field current and torque current at the power mode or economy mode and outputs them to the current control part 66.

The method for controlling the operation of the electric motor at the power mode include but not limited to a method in which the motor current is increased to a boost value which is not lower than the value obtained when the throttle is fully opened under normal conditions, a method in which the upper limit of the maximum speed is increased, and/or a method in which the maximum allowable motor current value is increased to a value which is greater than the maximum current value at the economy mode.

In the control routine mentioned before, the "power mode set period" is preferably the minimum period within the range suitable to perform an operation in which priority is given to power while suppressing the consumption of the battery. The "set period" may be a variable rather than a fixed value based on the vehicle speed, the motor rotational speed, the change rate of the throttle displacement or the like. For example, when the vehicle speed and the motor rotational speed are low, or the rate of change in throttle displacement is large, the power mode set period is set to a relatively long period of time. Otherwise, the power mode set period is set to a relatively short period of time. The point is that, while power mode operation is necessary, the flag for the power mode has to be maintained.

The switching or returning of the operation mode with the operation mode switching means may be made by a timer as mentioned before or by a means which returns the operation mode to the former state when the rate of change in throttle displacement indicates deceleration, a means which returns the operation mode to the former state when the fact that the throttle opening becomes a predetermined value or smaller, including the fully closed state, is detected, a means which returns the operation mode to the former state when the main switch is turned on after having been turned off, and/or a means which returns the operation mode to the former state when the vehicle speed becomes zero or a combination thereof. In other words, any means which detects the fact that the vehicle is brought into a non-accelerating state such as a decelerating state and returns the operation mode which has been switched to the power mode to the economy mode can be used.

Although no mode selection switch is necessary in the embodiment described previously, a mode selection switch may be provided. In this case, the operation control unit 30 switches the operation mode based on a mode selection switch signal. When the mode selection switch is in the economy mode position, the operation mode is temporarily switched to the power mode based on the rate of change in throttle displacement.

While the operation mode switch is in the power mode position, the operation mode may be switched to the economy mode temporarily when the rate of change in throttle displacement indicates deceleration, that is, when the vehicle is brought into a decelerating or non-accelerating state such as when the throttle grip is released.

The control unit 30 detects the position of the mode selection switch and sets the operation mode determination flag. When the operation mode is switched based on the rate of change in throttle displacement, the determination flag is temporarily set to a different operation mode irrespective of the position of the operation mode selection switch.

Description will be made of the operation of the driving device for an electric two-wheeled vehicle in detail with reference to Fig. 3. When the electric motor is turned on, the operation mode determination flag is set to "0" corresponding to the economy mode. When the vehicle runs on a flat road at rated speed, the process goes from step 300 to step 302. Then, a negative judgment is made in step 304, and the economy mode is maintained.

When the rider rotates the throttle grip to accelerate the electric two-wheeled vehicle, the process goes from step 304 to step 306. Then, a negative judgment is made in step 308 and power mode operation is started.

While the electric two-wheeled vehicle is accelerating, the process goes from step 300 to step 308, and the power mode operation is continued until the predetermined period elapses. When the predetermined period has elapsed, the process goes from step 308 to step 310 and the operation mode is returned to the economy mode. With the driving device, operation in which priority is given to power performance can be achieved without adversely affecting efficiency when necessary during the running in the economy mode even if an operation mode selection switch is not provided.

As has been described previously, the driving device for an electric two-wheeled vehicle according to this invention includes an electric motor for driving a driving wheel, and an electric motor operation control unit for operating the electric motor in an operation mode giving priority to power performance or an operation mode giving priority to efficiency, in which the electric motor operation control unit is provided with a throttle displacement sensor, throttle displacement change rate obtaining means for obtaining a rate of change in throttle displacement, and operation mode switching control means for switching the electric motor from the current operation mode to the other operation mode based on the rate of change for a predetermined period of time and returning the electric motor to the original operation mode after the predetermined period of time. Thus, there is provided a driving device for an electric two-wheeled vehicle which automatically switches the operation mode of the electric motor depending upon the running conditions of the vehicle without imposing a burden on the rider.

Accordingly, when the electric motor is operated in the economic mode and when high power performance is needed to overtake or climb a hill, the electric motor is automatically switched to the power mode and returned to the economy mode after a predetermined period of time. Thus, it is possible to realize operation in which priority is given to efficiency and high power performance can be achieved when necessary without imposing a burden on the rider.

Accordingly, as described above, in order to provide a driving device for an electric two-wheeled vehicle which can satisfy the demand that the preferably two-wheeled vehicle has to be operated economically and which can change the operation mode to a power mode without imposing a burden on the rider when extra power is needed, it is proposed to provide therein an electric m otor 28 for driving a driving wheel 22, and an electric motor operation control unit 30 for operating the electric motor in a mode giving priority to power performance or a mode giving priority to efficiency. The electric motor operation control unit 30 obtains a rate of change in throttle displacement from a value measured by a throttle displacement sensor, switches the electric motor from the current operation mode to the other operation mode depending upon the rate of change for a predetermined period of time, and returns the electric motor to the original operation mode after the predetermined period of time.

## Claims

1. Electric vehicle, in particular a two-wheeled vehicle, comprising a driving device including:
an electric motor (28) for driving a driving wheel (22), and
an electric motor operation control unit (30) adapted to operate said electric motor (28) in an operation mode giving priority to power performance or in an operation mode giving priority to efficiency, which comprises an operation mode switching control means (65,65E,304) adapted to switch said electric motor (28) from the current operation mode to the other operation mode, wherein said driving device is further comprising a motor load detecting device (58),
**characterized in that**
said operation mode switching control means (65,65E,304) is adapted to return said electric motor (28) from the other operation mode to the original operation mode after a set period,
said operation mode switching control means (65,65E,304) is configured to determine whether said rate of change in throttle displacement is a predetermined value or higher when said electric motor (28) is in said operation mode giving priority to efficiency, to switch said electric motor (28) from said operation mode giving priority to efficiency to an operation mode giving priority to power, for a set period and to return said electric motor (28) to said operation mode giving priority to efficiency after the set period, and
said set period is a predetermined period of time.

2. Electric vehicle according to claim 1, **characterized in that** said motor load detecting device (58) is a throttle displacement sensor.

3. Electric vehicle according to claim 2, **characterized in that** said electric motor operation control unit (30) further comprises a throttle displacement change rate obtaining means (65,302) adapted to obtain a rate of change in throttle displacement, wherein said switching operation is based on said rate of change.

4. Electric vehicle according to at least one of the claims 1 to 3, **characterized in that** said electric motor operation control unit (30) comprises an operation mode determination means (65D,300) adapted to determin the current operation mode of said electric motor (28).

5. Electric vehicle according to at least one of the claims 1 to 4, **characterized in that** said electric motor operation control unit (30) is configured to set said electric motor (28) to said operation mode giving priority to efficiency preferentially.

6. Electric vehicle according to at least one of the claims 1 to 5, **characterized in that** said set period is a variable based on a vehicle speed, a motor rotational speed or a change rate of a throttle displacement.

7. Electric vehicle according to at least one of the claims 1 to 6, **characterized in that** said operation mode switching control means (65,65E) comprises a means which is adapted to detect a change of an operation mode from an accelerating state into a non-accelerating state, in particular a decelerating state.

8. Electric vehicle according to at least one of the claims 1 to 7, **characterized in that** said operation mode switching control means (65,65E) comprises a means which is adapted to return the operation mode to the original operation mode when the rate of change in throttle displacement indicates deceleration, a means which is adapted to return the operation mode to the original operation mode when the fact that the throttle opening becomes a predetermined value or smaller, including the fully closed state, is detected, a means which is adapted to return the operation mode to the original operation mode when the main switch is turned on after having been turned off, and/or a means which is adapted to return the operation mode to the original operation mode when the vehicle speed becomes zero.

## Patentansprüche

1. Elektrofahrzeug, insbesondere ein Zweiradfahrzeug, das eine Antriebsvorrichtung aufweist, enthaltend:
einen Elektromotor (28) zum Antreiben eines Antriebsrades (22) und
eine Elektromotor- Betriebssteuereinheit (30), vorgesehen um den Elektromotor (28) zu betätigen in einem Betriebsmodus, der der Antriebsleistung Priorität gibt, oder in einem Betriebsmodus, der der Wirtschaftlichkeit Priorität gibt, der eine Betriebsmodus- Umschaltsteuereinrichtung (65, 65E, 304) aufweist, vorgesehen , um den Elektromotor (28) aus dem momentanen Betriebsmodus in den anderen Modus zu schalten, wobei die Antriebsvorrichtung außerdem eine Motorlast- Erfassungsvorrichtung (58) aufweist,
**dadurch gekennzeichnet, dass**
die Betriebsmodus- Schaltsteuereinrichtung (65, 65E, 304) vorgesehen ist, den Elektromotor (28) aus dem anderen Betriebsmodus in den ursprünglichen Betriebsmodus nach einer festgelegten Zeitdauer zurückzuführen,
wobei die Betriebsmodus- Schaltsteuereinrichtung (65, 65E, 304) konfiguriert ist, zu bestimmen, ob die Veränderungsgeschwindigkeit in einer Drosselverlagerung ein vorbestimmter Wert ist oder höher, wenn der Elektromotor (28) in dem Betriebsmodus ist, der die Priorität der Wirtschaftlichkeit gibt, um den Elektromotor (28) aus dem Betriebsmodus, der die Priorität der Wirtschaftlichkeit gibt, in einen Betriebsmodus, der die Priorität der Leistung gibt, für eine festgelegte Zeitdauer zu schalten und den Elektromotor (28) in den Betriebsmodus, der die Priorität der Wirtschaftlichkeit gibt, nach der festgelegten Zeitdauer zurückzuführen, und
wobei die festgelegte Zeitdauer eine vorbestimmte Zeitdauer ist.

2. Elektrofahrzeug nach Anspruch 1, **dadurch gekennzeichnet, dass** die Motorlast-Erfassungsvorrichtung (58) ein Drosselverlagerungssensor ist.

3. Elektrofahrzeug nach Anspruch 2, **dadurch gekennzeichnet, dass** die Elektromotor- Betriebssteuereinheit (30) außerdem eine Drosselverlagerungs- Veränderungsgeschwindigkeit- Erlangungseinrichtung (65, 302) aufweist, vorgesehen, eine Veränderungsgeschwindigkeit in der Drosselverlagerung zu erlangen, wobei die Schaltbetätigung auf der Veränderungsgeschwindigkeit basiert.

4. Elektrofahrzeug nach zumindest einem der Ansprüche 1 bis 3, **dadurch gekennzeichnet, dass** die Elektromotor- Betriebssteuereinheit (30) eine Betriebsmodus-Bestimmungseinrichtung (65D, 300) aufweist, vorgesehen den momentanen Betriebsmodus des Elektromotors (28) zu bestimmen.

5. Elektrofahrzeug nach zumindest einem der Ansprüche 1 bis 4, **dadurch gekennzeichnet, dass** die Elektromotor- Betriebssteuereinheit (30) konfiguriert ist, den Elektromotor (28) vorzugsweise in den Betriebsmodus zu setzen, der die Priorität der Wirtschaftlichkeit gibt.

6. Elektrofahrzeug nach zumindest einem der Ansprüche 1 bis 5, **dadurch gekennzeichnet, dass** der festgelegte Zeitraum eine Variable auf der Grundlage einer Fahrzeuggeschwindigkeit, einer Motordrehzahl oder einer Veränderungsgeschwindigkeit der Drosselverlagerung ist.

7. Elektrofahrzeug nach zumindest einem der Ansprüche 1 bis 6, **dadurch gekennzeichnet, dass** die Betriebsmodus- Schaltsteuereinrichtung (65, 65E) eine Einrichtung aufweist, die vorgesehen ist, eine Veränderung eines Betriebsmodus von einem Beschleunigungszustand in einen nicht- Beschleunigungszustand, insbesondere in einen Bremszustand, zu erfassen.

8. Elektrofahrzeug nach zumindest einem der Ansprüche 1 bis 7, **dadurch gekennzeichnet, dass** die Betriebsmodus- Schaltsteuereinrichtung (65, 65E) eine Einrichtung aufweist, die vorgesehen ist, einen Betriebsmodus in den ursprünglichen Betriebsmodus zurückzuführen, wenn die Veränderungsgeschwindigkeit in der Drosselverlagerung eine Bremsung anzeigt, eine Einrichtung, die vorgesehen ist, den Betriebsmodus in den ursprünglichen Betriebsmodus zurückzuführen, wenn die Tatsache erfasst wird, dass die Drosselöffnung ein vorbestimmter Wert oder kleiner wird, was den vollständig geschlossenen Zustandes einschließt, eine Einrichtung, die vorgesehen ist, den Betriebsmodus in den ursprünglichen Betriebsmodus zurückzuführen, wenn die Schalteinrichtung, nachdem sie ausgeschaltet war, eingeschaltet wird und / oder eine Einrichtung, die vorgesehen ist, den Betriebsmodus in den ursprünglichen Betriebsmodus zurückzuführen, wenn die Fahrzeuggeschwindigkeit Null wird.

## Revendications

1. Véhicule électrique, en particulier véhicule à deux roues, comprenant un dispositif d'entraînement comprenant :
un moteur électrique (28) pour entraîner une roue motrice (22), et
une unité de commande de fonctionnement de moteur électrique (30) adaptée pour faire fonctionner ledit moteur électrique (28) dans un mode de fonctionnement donnant la priorité à la performance de puissance ou dans un mode de fonctionnement donnant la priorité au rendement, qui comprend des moyens de commande de commutation de mode de fonctionnement (65, 65E, 304) adaptés pour commuter ledit moteur électrique (28) du mode de fonctionnement actuel dans l'autre mode de fonctionnement, dans lequel ledit dispositif d'entraînement comprend en outre un dispositif de détection de charge de moteur (58),
**caractérisé en ce que**
lesdits moyens de commande de commutation de mode de fonctionnement (65, 65E, 304) sont adaptés pour ramener ledit moteur électrique (28) de l'autre mode de fonctionnement dans le mode de fonctionnement d'origine après une période fixée,
lesdits moyens de commande de commutation de mode de fonctionnement (65, 65E, 304) sont configurés pour déterminer si ledit taux de changement du déplacement du papillon est une valeur prédéterminée ou plus élevée lorsque ledit moteur électrique (28) est dans ledit mode de fonctionnement donnant la priorité au rendement, pour commuter ledit moteur électrique (28) dudit mode de fonctionnement donnant la priorité au rendement dans un mode de fonctionnement donnant la priorité à la puissance, pendant une période fixée, et pour ramener ledit moteur électrique (28) dans ledit mode de fonctionnement donnant la priorité au rendement après la période fixée, et
ladite période fixée est une période de temps prédéterminée.

2. Véhicule électrique selon la revendication 1, **caractérisé en ce que** ledit dispositif de détection de charge de moteur (58) est un capteur de déplacement de papillon.

3. Véhicule électrique selon la revendication 2, **caractérisé en ce que** ladite unité de commande de fonctionnement de moteur électrique (30) comprend en outre des moyens d'obtention de taux de changement de déplacement de papillon (65, 302) adaptés pour obtenir un taux de changement de déplacement de papillon, dans lequel ladite opération de commutation est basée sur ledit taux de changement.

4. Véhicule électrique selon au moins l'une des revendications 1 à 3, **caractérisé en ce que** ladite unité de commande de fonctionnement de moteur électrique (30) comprend des moyens de détermination de mode de fonctionnement (65D, 300) adaptés pour déterminer le mode de fonctionnement actuel dudit moteur électrique (28).

5. Véhicule électrique selon au moins l'une des revendications 1 à 4, **caractérisé en ce que** ladite unité de commande de fonctionnement de moteur électrique (30) est configurée pour mettre ledit moteur électrique (28) dans ledit mode de fonctionnement donnant la priorité au rendement de préférence.

6. Véhicule électrique selon au moins l'une des revendications 1 à 5, **caractérisé en ce que** ladite période fixée est une variable basée sur une vitesse de véhicule, une vitesse de rotation de moteur ou un taux de changement d'un déplacement de papillon.

7. Véhicule électrique selon au moins l'une des revendications 1 à 6, **caractérisé en ce que** lesdits moyens de commande de commutation de mode de fonctionnement (65, 65E) comprennent des moyens qui sont adaptés pour détecter un changement d'un mode de fonctionnement d'un état d'accélération dans un état de non accélération, en particulier un état de décélération.

8. Véhicule électrique selon au moins l'une des revendications 1 à 7, **caractérisé en ce que** lesdits moyens de commande de commutation de mode de fonctionnement (65, 65E) comprennent des moyens qui sont adaptés pour ramener le mode de fonctionnement dans le mode de fonctionnement d'origine lorsque le taux de changement de déplacement du papillon indique une décélération, des moyens qui sont adaptés pour ramener le mode de fonctionnement dans le mode de fonctionnement d'origine lorsque le fait que l'ouverture de papillon atteint une valeur prédéterminée ou plus petite, comprenant l'état complètement fermé, est détecté, des moyens qui sont adaptés pour ramener le mode de fonctionnement dans le mode de fonctionnement d'origine lorsque le commutateur principal est fermé après avoir été ouvert, et/ou des moyens qui sont adaptés pour ramener le mode de fonctionnement dans le mode de fonctionnement d'origine lorsque la vitesse de véhicule devient nulle.
